# EUROPÄISCHE PATENTANMELDUNG

(11) **EP 3 292 936 A1**
(43) Veröffentlichungstag der Anmeldung: **14.03.2018**
(21) Anmeldenummer: 16187971.3
(22) Anmeldetag: 09.09.2016
(51) Int. Cl.: B23K 9/073, B23K 9/09, B23K 9/095, B23K 9/10

(54) **KURZSCHLUSSSCHWEISSVERFAHREN UND VORRICHTUNG ZUR DURCHFÜHRUNG EINES SOLCHEN KURZSCHLUSSSCHWEISSVERFAHRENS**

(71) Anmelder: Fronius International GmbH, 4643 Pettenbach (AT)
(72) Erfinder: WALDHÖR, Andreas, 4643 Pettenbach (AT); ARTELSMAIR, Josef, 4552 Wartberg (AT); MAYER, Manuel, 4650 Edt bei Lambach (AT)
(74) Vertreter: Sonn & Partner Patentanwälte

(57) **Zusammenfassung**

Die Erfindung betrifft ein Kurzschlussschweißverfahren mit aufeinanderfolgenden Schweißzyklen (SZ) mit jeweils einer Lichtbogenphase (LB) und einer Kurzschlussphase (KS), wobei zumindest die Schweißparameter Schweißstrom (I) und Fördergeschwindigkeit (v) einer abschmelzenden Elektrode des Kurzschlussschweißverfahrens geregelt oder eingestellt werden, und die Elektrode zumindest während eines Teils der Lichtbogenphase (LB) mit einer vorgegebenen Vorwärtsendgeschwindigkeit (vᵥₑ) in Richtung eines zu bearbeitenden Werkstücks gefördert wird, und zumindest während eines Teils der Kurzschlussphase (KS) mit einer vorgegebenen Rückwärtsendgeschwindigkeit (v_{Re}) vom Werkstück weg gefördert wird, sowie eine Vorrichtung zur Durchführung eines solchen Kurzschlussschweißverfahrens. Eine Änderung der Fördergeschwindigkeit (dv/dt) und eine Rückwärtsendgeschwindigkeit (v_{Re}) wird so vorgegeben und ein Schweißstrom (I) so geregelt oder eingestellt, dass die Kurzschlussphase (KS) nach Erreichen der Rückwärtsendgeschwindigkeit (v_{Re}) und nach spätestens 3 ms beendet wird und spätestens alle 8 ms wiederholt wird.

## Beschreibung

Die Erfindung betrifft ein Kurzschlussschweißverfahren mit aufeinanderfolgenden Schweißzyklen mit jeweils einer Lichtbogenphase und einer Kurzschlussphase, wobei zumindest die Schweißparameter Schweißstrom und Fördergeschwindigkeit einer abschmelzenden Elektrode des Kurzschlussschweißverfahrens geregelt oder eingestellt werden, und die Elektrode zumindest während eines Teils der Lichtbogenphase mit einer vorgegebenen Vorwärtsendgeschwindigkeit in Richtung eines zu bearbeitenden Werkstücks gefördert wird, und zumindest während eines Teils der Kurzschlussphase mit einer vorgegebenen Rückwärtsendgeschwindigkeit vom Werkstück weg gefördert wird.

Weiters betrifft die Erfindung eine Vorrichtung zur Durchführung eines solchen Kurzschlussschweißverfahrens mit aufeinanderfolgenden Schweißzyklen mit jeweils einer Lichtbogenphase und einer Kurzschlussphase, mit einer Einrichtung zur Regelung zumindest der Schweißparameter Schweißstrom und Fördergeschwindigkeit einer abschmelzenden Elektrode, und mit einer Einrichtung zur Förderung der Elektrode zumindest während eines Teils der Lichtbogenphase bis zu einer vorgegebenen Vorwärtsendgeschwindigkeit in Richtung eines zu bearbeitenden Werkstücks, und zumindest während eines Teils der Kurzschlussphase bis zu einer vorgegebenen Rückwärtsendgeschwindigkeit vom Werkstück weg.

Ein Kurzschlussschweißverfahren der gegenständlichen Art wird mit einer abschmelzenden Elektrode, welche sowohl in Vorwärtsrichtung zum Werkstück als auch in Rückwärtsrichtung vom Werkstück weg gefördert wird, mit einer entsprechenden Vorrichtung und einer Fördereinrichtung für die Elektrode und einem Schweißbrenner durchgeführt. Der Schweißbrenner weist dabei eine Fördereinrichtung für die Elektrode auf und kann sowohl für das manuelle Schweißen als auch für das automatisierte Schweißen verwendet werden. Die Vorrichtung zur Durchführung des Kurzschlussschweißverfahrens regelt dabei zumindest die Schweißparameter Schweißstrom und Fördergeschwindigkeit. Eine Schweißspannung wird insbesondere dazu verwendet, einen Kurzschluss zwischen Elektrode und Werkstück zu erkennen. Ebenso wird mit der Schweißspannung die Zündung eines Lichtbogens, also das Ende des Kurzschlusses, erkannt. Bei einem Kurzschlussschweißverfahren folgen Schweißzyklen aufeinander, in welchen sich eine Kurzschlussphase und eine Lichtbogenphase periodisch abwechseln. In der Kurzschlussphase wird die Elektrode zurück gefördert und es erfolgt der Materialübergang, wobei in der Lichtbogenphase die Elektrode vorwärts gefördert wird und der Lichtbogen Wärme in das Werkstück bzw. die Elektrode einbringt.

Beispielsweise beschreibt die WO 2006/089322 A1 ein solches Kurzschlussschweißverfahren und eine Vorrichtung zur Durchführung eines Kurzschlussschweißverfahrens.

Bei bekannten Kurzschlussschweißverfahren treten insbesondere bei höheren Schweißgeschwindigkeiten Instabilitäten auf, welche zu Verringerungen der Schweißqualität führen können.

Die Aufgabe der vorliegenden Erfindung besteht darin, ein oben genanntes Kurzschlussschweißverfahren zu schaffen, welches sich durch möglichst hohe Stabilität und hohe Geschwindigkeit auszeichnet und einen ausreichenden Einbrand für Werkstücke mit einer Dicke bis 3 mm bietet und eine entsprechend hohe Schweißqualität bietet. Eine weitere Aufgabe besteht in der Schaffung einer Vorrichtung zur Durchführung eines Kurzschlussschweißverfahrens, mit dem die erwähnten Vorteile erzielt werden können. Nachteile bekannter Schweißverfahren oder Vorrichtungen sollen vermieden oder zumindest reduziert werden.

Die Aufgabe wird durch ein Kurzschlussschweißverfahren gelöst, bei dem eine Änderung der Fördergeschwindigkeit und eine Rückwärtsendgeschwindigkeit vorgegeben wird und ein Schweißstrom geregelt oder eingestellt wird, dass die Kurzschlussphase nach Erreichen der Rückwärtsendgeschwindigkeit und nach spätestens 3 ms beendet wird und spätestens alle 8 ms wiederholt wird. Die Änderung der Fördergeschwindigkeit, also die Beschleunigung, ergibt sich aus der gewünschten Dauer für die Kurzschlussphase. Für ein im Wesentlichen spritzerfreies Kurzschlussschweißverfahren wird ein Prozess mit einer Vor- und Rückbewegung der Elektrode verwendet. Aus dieser Vor- und Rückbewegung resultiert eine Schweißfrequenz, die eine Periode für einen aus Kurzschlussphase und Lichtbogenphase bestehenden Schweißzyklus vorgibt. Die Schweißfrequenz hat dabei einen Einfluss auf die Stabilität des Kurzschlussschweißverfahrens und die Schweißgeschwindigkeit. Um beides mit möglichst hoher Qualität erfüllen zu können, ist eine Schweißfrequenz größer 125 Hz erforderlich, sodass spätestens alle 8ms ein neuer Schweißzyklus beginnt bzw. die Kurzschlussphase wiederholt wird. Um eine ausreichende Wärmeeinbringung in das Werkstück zu gewährleisten, insbesondere bei zunehmender Dicke des Werkstücks, sollte die Lichtbogenphase möglichst lang und die Kurzschlussphase entsprechend möglichst kurz sein. Eine kurze Kurzschlussphase hat dabei eine Dauer von weniger als 3 ms, bevorzugt zwischen 2 ms und 3 ms. Während der Kurzschlussphase muss die Förderrichtung der Elektrode von der Vorwärtsbewegung während der Lichtbogenphase in eine Rückwärtsbewegung während der Kurzschlussphase umgekehrt werden. Die Geschwindigkeiten, sowohl für die Vorwärtsbewegung als auch für die Rückwärtsbewegung sind von der Schweißanwendung, insbesondere vom Material des Werkstücks, abhängig. Typische Werte sind bis zu 60 m/min für die Vorwärts- und Rückwärtsbewegung. Die Rückwärtsendgeschwindigkeit ist dabei meist geringer als die Vorwärtsendgeschwindigkeit, sodass die Elektrode im Mittel während des Kurzschlussschweißverfahrens in Vorwärtsrichtung zum Werkstück gefördert wird.

Vorzugsweise wird die Elektrode mit einer Vorwärtsendgeschwindigkeit während der Lichtbogenphase gefördert, welche im Wesentlichen der Rückwärtsendgeschwindigkeit während der Kurzschlussphase entspricht. Sind beide Geschwindigkeiten gleich und ist die Lichtbogenphase länger als die Kurzschlussphase, wird die Elektrode im Mittel während des Kurzschlussschweißverfahrens ebenfalls in Vorwärtsrichtung gefördert. Vorteilhaft ist hierbei, dass dennoch im Mittel eine Förderung der Elektrode in Richtung Werkstück resultiert, da die Kurzschlussphase wesentlich kürzer als die Lichtbogenphase ist.

Vorteilhafter Weise wird die Elektrode mit einer Vorwärtsendgeschwindigkeit während der Lichtbogenphase und einer Rückwärtsendgeschwindigkeit während der Kurzschlussphase im Bereich zwischen 30 m/min und 60 m/min gefördert.

Gemäß einem weiteren Merkmal der Erfindung ist vorgesehen, dass die Vorwärtsendgeschwindigkeit der Elektrode bereits vor dem Beginn der Kurzschlussphase reduziert wird. Dadurch kann die gewünschte geringe Dauer der Kurzschlussphase bzw. eine hohe Schweißfrequenz erzielt werden.

Dabei werden die Schweißparameter vorzugsweise derart geregelt, dass die Dauer eines Schweißzyklus kleiner oder gleich 8 ms, vorzugsweise kleiner oder gleich 6,6 ms, beträgt, resultierend in einer Schweißfrequenz von größer oder gleich 125 Hz, vorzugsweise größer oder gleich 150 Hz.

Bevorzugt werden die Schweißparameter derart geregelt werden, dass die Dauer der Lichtbogenphase mindestens doppelt so groß wie die Dauer der Kurzschlussphase ist.

Der Schweißstrom kann in Form eines Strompulses geregelt werden, dessen Dauer in der Kurzschlussphase in Abhängigkeit vom bevorstehenden Ende der Kurzschlussphase ermittelt wird.

Für die Schweißqualität ist es von Vorteil, wenn der Schweißstrom während der Kurzschlussphase zunächst über eine vorgegebene Dauer, vorzugsweise von zumindest 1 ms, auf einem vorgegebenen Wert konstant gehalten und danach reduziert wird.

Die Änderung der Fördergeschwindigkeit der Elektrode wird vorzugsweise in einem Bereich zwischen 30000 m/min/s und 60000 m/min/s vorgegeben, sodass die gewünschten Zeiten und Geschwindigkeiten erzielt werden können.

Gelöst wird die erfindungsgemäße Aufgabe auch durch eine oben erwähnte Vorrichtung zur Durchführung eines Kurzschlussschweißverfahrens, wobei die Regelungseinrichtung dazu ausgebildet ist, spätestens mit dem Beginn der Kurzschlussphase die Vorwärtsendgeschwindigkeit der Fördergeschwindigkeit der Elektrode zu reduzieren und bis zur Rückwärtsendgeschwindigkeit umzukehren, und die Fördergeschwindigkeit der Elektrode so zu regeln, dass die Kurzschlussphase spätestens nach 3 ms beendet ist und und spätestens alle 8 ms wiederholt wird. Zu den dadurch erzielbaren Vorteilen wird auf die obige Beschreibung des Kurzschlussschweißverfahrens verwiesen.

Vorzugsweise ist die Einrichtung zur Förderung der Elektrode durch einen Direktantrieb oder einen Linearantrieb gebildet.

Die vorliegende Erfindung wird anhand der beigefügten Zeichnungen näher erläutert. Darin zeigen:
Fig. 1 eine schematische Darstellung einer Schweißmaschine bzw. eines Schweißgerätes; und
Fig. 2 den zeitlichen Verlauf des Schweißstromes I, der Schweißspannung U und der Fördergeschwindigkeit v der Elektrode während eines erfindungsgemäßen Kurzschlussschweißverfahrens.

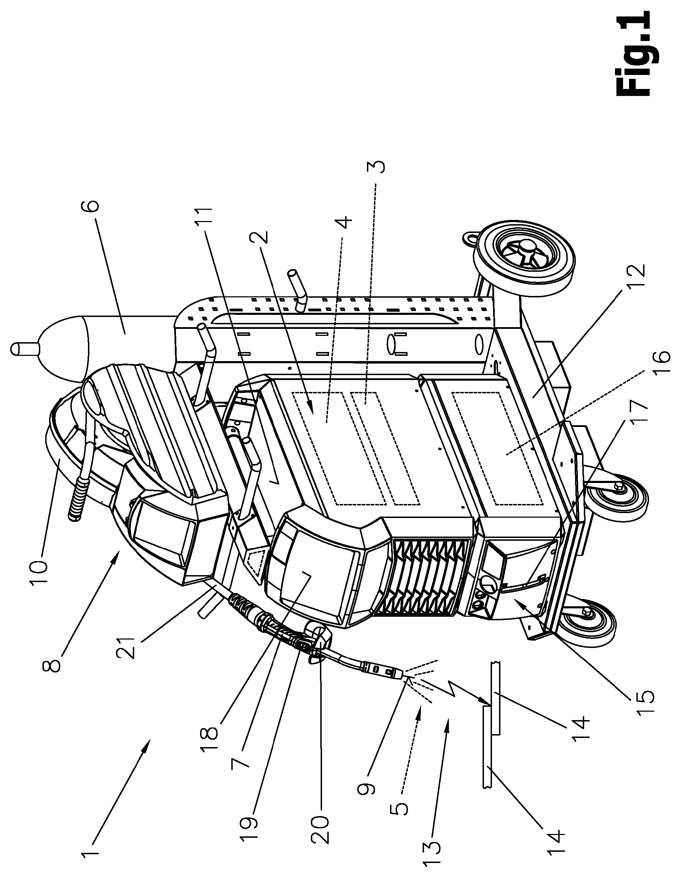

In Fig. 1 ist eine Vorrichtung 1 zur Durchführung eines Schweißverfahrens bzw. ein Schweißgerät für verschiedenste Schweißprozesse gezeigt. Die Vorrichtung 1 umfasst eine Stromquelle 2 mit einem darin angeordneten Leistungsteil 3, eine Einrichtung 4 zur Regelung von Schweißparametern P, wie dem Schweißstrom I oder der Fördergeschwindigkeit v einer abschmelzenden Elektrode 9 bzw. eines Schweißdrahts. Die Regeleinrichtung 4 ist beispielsweise mit einem Steuerventil verbunden, welches in einer Versorgungsleitung für ein Schutzgas 5 zwischen einem Gasspeicher 6 und einem Schweißbrenner 7 angeordnet ist. Zudem kann über die Regeleinrichtung 4 noch eine Einrichtung 8 zur Förderung der abschmelzenden Elektrode 9 angesteuert werden, wobei über eine Versorgungsleitung die Elektrode 9 von einer Vorratstrommel 10 in den Bereich des Schweißbrenners 7 zugeführt wird. Die Fördereinrichtung 8 kann auch in der Vorrichtung 1, insbesondere im Gehäuse 11 der Stromquelle 2, integriert und nicht, wie in Fig. 1 dargestellt, als Zusatzgerät auf einen Fahrwagen 12 positioniert sein. Es ist auch möglich, dass die Fördereinrichtung 8 die Elektrode 9 außerhalb des Schweißbrenners 7 an die Prozessstelle zuführt.

Der Schweißstrom I zum Aufbauen eines Lichtbogens 13 zwischen der Elektrode 9 und zumindest einem Werkstück 14 wird über eine Schweißleitung (nicht dargestellt) vom Leistungsteil 3 der Stromquelle 2, der Elektrode 9 zugeführt und über den Lichtbogen 13 ein Stromkreis gebildet. Das Werkstück 14 ist über eine weitere Schweißleitung (nicht dargestellt) mit der Stromquelle 2 verbunden.

Zum Kühlen des Schweißbrenners 7 kann über ein Kühlgerät 15 der Schweißbrenner 7 mit einem Flüssigkeitsbehälter 16 mit einer Füllstandsanzeige 17 verbunden werden und eine Kühlung des Schweißbrenners 7 erzielt werden.

Die Vorrichtung 1, insbesondere die Stromquelle 2, weist weiters eine Ein-/Ausgabevorrichtung 18 auf, über die die unterschiedlichsten Schweißparameter P, Betriebsarten oder Schweißprogramme eingestellt bzw. aufgerufen und angezeigt werden können. Dabei werden die über die Ein-/Ausgabevorrichtung 18 eingestellten Schweißparameter P, Betriebsarten oder Schweißprogramme an die Regeleinrichtung 4 weitergeleitet und von dieser werden anschließend die einzelnen Komponenten der Vorrichtung 1 angesteuert bzw. entsprechende Sollwerte für die Regelung oder Steuerung vorgegeben. Hierbei können auch bei Verwendung eines entsprechenden Schweißbrenners 7 Einstellvorgänge über den Schweißbrenner 7 vorgenommen werden, wobei der Schweißbrenner 7 mit einer Schweißbrenner-Ein-/Ausgabevorrichtung 19 ausgestattet ist. Bevorzugt ist der Schweißbrenner 7 über einen Datenbus mit der Vorrichtung 1, insbesondere der Stromquelle 2 oder der Fördervorrichtung 8 verbunden.

Zum Starten des Schweißprozesses weist der Schweißbrenner 7 meist einen Startschalter (nicht dargestellt) auf, sodass durch Betätigen des Startschalters der Lichtbogen 13 gezündet werden kann. Um gegen die große Hitzeeinstrahlung vom Lichtbogen 13 geschützt zu werden, ist es möglich, dass der Schweißbrenner 7 mit einem Hitzeschutzschild 20 ausgestattet wird. Weiters ist in dem dargestellten Ausführungsbeispiel der Schweißbrenner 7 über ein Schlauchpaket 21 mit der Vorrichtung 1 verbunden. Im Schlauchpaket 21 sind die einzelnen Leitungen, wie beispielsweise die Versorgungsleitung bzw. Leitungen für die Elektrode 9, für das Schutzgas 5, für den Kühlkreislauf, für die Datenübertragung, usw., von der Vorrichtung 1 zum Schweißbrenner 7 angeordnet.

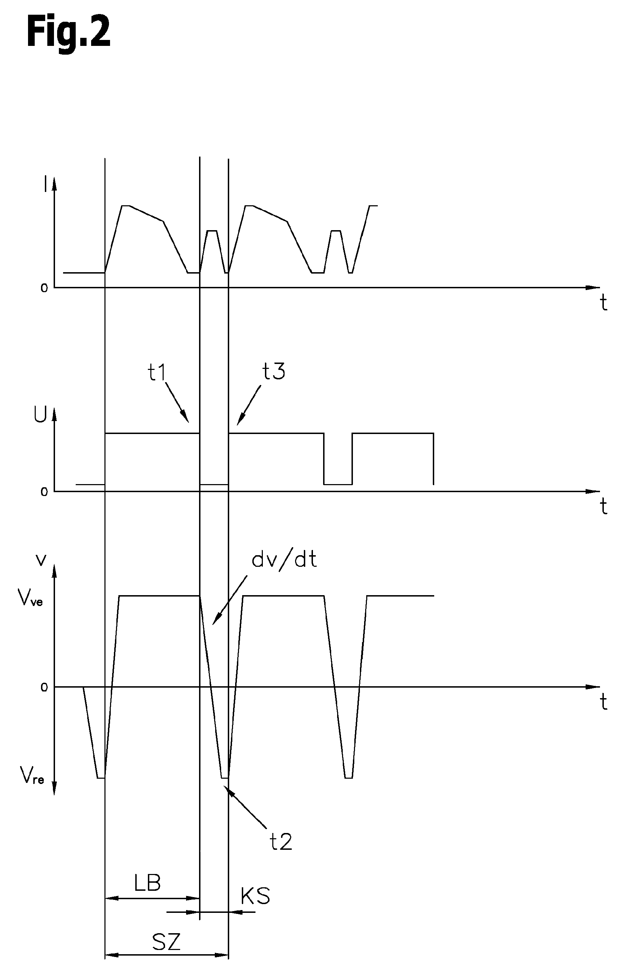

Beispielhaft ist in Fig. 2 der zeitliche Verlauf des Schweißstromes I, der Schweißspannung U und der Fördergeschwindigkeit v der Elektrode 9 während eines Kurzschlussschweißverfahrens dargestellt. Das Kurzschlussschweißverfahren wird mit den folgenden Parametern bzw. Werten durchgeführt:
Vorwärtsendgeschwindigkeit v_{Ve}: 50 m/min
Rückwärtsendgeschwindigkeit v_{Re}: 40 m/min
Schweißstrom I in der Kurzschlussphase KS: 120 A
Dauer der Kurzschlussphase KS: im Mittel 2,5 ms
Schweißfrequenz f: 150 Hz

Aus den Zeitverläufen ist ersichtlich, dass die Richtung der Förderung der Elektrode in der Kurzschlussphase KS von der Vorwärtsförderung in Richtung Werkstück mit der Vorwärtsendgeschwindigkeit v_{Ve} von 50 m/min auf eine Rückwärtsbewegung vom Werkstück weg mit einer Rückwärtsendgeschwindigkeit v_{Re} von 40m/min umgekehrt wird. Die Fördergeschwindigkeit v kann auch bereits vor dem Kurzschluss KS reduziert werden, sodass die Richtungsumkehr schneller durchgeführt werden kann und die Elektrode weniger tief in das Schmelzbad eintaucht. Beispielsweise erfolgt die Reduktion der Vorwärtsendgeschwindigkeit v_{Ve} nachdem diese eine Zeitdauer konstant war oder nach einer gewissen Lichtbogenbrenndauer. Spätestens zum Zeitpunkt t1 - also mit Beginn der Kurzschlussphase KS - wird der Einrichtung zur Förderung der Elektrode bzw. einem Motorregler ein Wert für die Beschleunigung, also die Änderung der Fördergeschwindigkeit dv/dt, vorgegeben, sodass zu einem Zeitpunkt t2 die gewünschte Rückwärtsendgeschwindigkeit v_{Re} erreicht wird.

Beim Beispiel gemäß Fig. 2 ist dafür eine Beschleunigung von 40000m/min/s (667m/s²) erforderlich, welche einem Motorregler der Fördereinrichtung vorgegeben wird, der die Fördergeschwindigkeit v entsprechend regelt. Der Motorregler gewährleistet also, dass die Rückwärtsendgeschwindigkeit v_{Re} zum Zeitpunkt t2 in der Kurzschlussphase KS erreicht wird. Ist die Rückwärtsendgeschwindigkeit v_{Re} erreicht, wird die Beschleunigung auf null gestellt und die Fördergeschwindigkeit v gehalten, reduziert oder erhöht, bis der Kurzschluss aufgebrochen wird und der Lichtbogen gezündet wird.

Ob und wie die Fördergeschwindigkeit v nach dem Erreichen der Rückwärtsendgeschwindigkeit v_{Re} verändert wird, wird bei der Definition der Schweißkennlinie festgelegt. Eine Schweißkennlinie wird nach den Anforderungen einer Schweißanwendung erstellt und ist hauptsächlich von Material (Al, CrNi, Stahl, ...), der Dicke des Werkstücks und der Schweißgeschwindigkeit abhängig.

Die Beschleunigung der Förderung der Elektrode wird unter anderem wie die Rückwärtsendgeschwindigkeit v_{Re} über die jeweilige Schweißkennlinie vorgegeben.

In der Kurzschlussphase KS befindet sich die abschmelzende Elektrode im Schmelzbad und der Tropfen wird vom Ende der Elektrode in das Schmelzbad übergeben. Um sicherzustellen, dass der Tropfen während der Dauer der Kurzschlussphase KS im Schmelzbad abgelöst wird, wird der Schweißstrom I in Form eines Strompulses während der Kurzschlussphase KS geregelt oder eingestellt. Dabei wird der Schweißstrom I derart geregelt oder eingestellt, dass der Tropfen nicht während des Strompulses abgelöst wird, sodass keine Spritzer entstehen. Die Amplitude und der Verlauf des Schweißstromes I wird an die erforderliche Energie während der kurzen Dauer der Kurzschlussphase KS angepasst- zum einen für die Aufrechterhaltung der Temperatur der Elektrode und zum anderen als Vorbereitung für die Tropfenablöse. Der Wert wird im Wesentlichen in Abhängigkeit des Materials des Werkstücks gewählt. Gemäß Fig. 2 wird eine Amplitude des Schweißstroms I von 120 A so lange konstant gehalten, bis das Ende der Kurzschlussphase KS unmittelbar bevorsteht - beispielsweise über 1 ms. Um Schweißspritzer bei der folgenden Tropfenablöse zu verhindern, wird der Strompuls erst kurz vor dem bevorstehenden Ende der Kurzschlussphase KS beendet bzw. die Amplitude des Schweißstroms I auf maximal 100 A, beispielsweise 50A reduziert. Dementsprechend wird die Dauer des Strompulses geregelt oder eingestellt. Die Tropfenablöse erfolgt dabei anschließend an diese Phase - also nach dem Strompuls - und ist im Wesentlichen spritzerfrei.

Ob der Strompuls geregelt wird oder eingestellt ist, wird im Wesentlichen mit der Schweißkennlinie definiert bzw. vorgegeben. Der Schweißstrom I (Amplitude und Dauer) wird entweder in Abhängigkeit zumindest eines Ereignisses geregelt oder es wird für die Amplitude und Dauer des Schweißstromes ein fixer Wert vorgegeben. Der Zeitpunkt, wann die Amplitude des Schweißstromes I den reduzierten Wert erreicht hat, muss nicht zwingend vom Zeitpunkt t2 abhängen. Gemäß Fig. 2 sind diese Zeitpunkte im Wesentlichen zwar identisch, dennoch unabhängig voneinander. Selbstverständlich kann dies auch so in der Schweißkennlinie vorgegeben werden, dass diese voneinander abhängig sind.

Das bevorstehende Ende der Kurzschlussphase KS wird dabei im Wesentlichen aufgrund der Änderung der Schweißspannung U ermittelt, wie zum Zeitpunkt t3 ersichtlich.

Das bevorstehende Ende der Kurzschlussphase KS kann aber auch derart ermittelt werden, dass zu Beginn der Kurzschlussphase KS aus der aktuellen Schweißspannung U und dem aktuellen Schweißstrom I ein Widerstand berechnet und gespeichert wird. Während der Kurzschlussphase KS kann ständig ein aktueller Widerstand ermittelt werden. Ist der aktuelle Widerstand um einen definierten Faktor höher als der gespeicherte Widerstand, steht die Zündung des Lichtbogens und der Beginn der Lichtbogenphase LB unmittelbar bevor und der Schweißstrom I wird reduziert. Es kann aber auch ein ständiger Vergleich des aktuellen Widerstandes mit dem vorher ermittelten Widerstand erfolgen und eine Änderung bzw. Steigung ausgewertet werden. Ist die Änderung im Wesentlichen sprunghaft, steht die Zündung des Lichtbogens unmittelbar bevor.

Durch die Ermittlung des bevorstehenden Endes der Kurzschlussphase KS kann auch die Beschleunigung der Förderung der Elektrode angepasst werden, um die Rückwärtsendgeschwindigkeit v_{Fe} noch während der Kurzschlussphase KS zu erreichen.

Durch die Rückwärtsförderung der Elektrode vom Werkstück weg wird zum Zeitpunkt t3 der Lichtbogen gezündet, sobald die Elektrode aus dem Schmelzbad austritt. Nachdem der Tropfen bereits abgelöst wurde und der Schweißstrom I bereits reduziert wurde, erfolgt dies ohne Schweißspritzer.

Der Zeitpunkt t3 der Zündung des Lichtbogens variiert geringfügig aufgrund der Schwingungen des Schmelzbades. Einen Einfluss hat auch die Eintauchtiefe der Elektrode in das Schmelzbad während der Vorwärtsförderung in Richtung Werkstück sowie die Temperatur der Elektrode. Auf die Stabilität des Schweißprozesses hat dies im Wesentlichen keinen Einfluss, da die Amplitude und Dauer des Strompulses in Abhängigkeit des bevorstehenden Endes der Kurzschlussphase KS geregelt wird. Somit wird die Temperatur des Schmelzbades weiterhin aufrecht erhalten.

Mit der Zündung des Lichtbogens und dem Beginn der Lichtbogenphase LB wird die Förderrichtung der Elektrode wieder umgekehrt bzw. die Umkehr eingeleitet und auf den Wert der Vorwärtsendgeschwindigkeit v_{Ve} beschleunigt, beispielsweise auf 50 m/min mit einer Beschleunigung von 40000 m/min/s, im Wesentlichen gleich wie die Beschleunigung auf die Rückwärtsendgeschwindigkeit v_{Re}. Ebenso wird mit der Zündung des Lichtbogens der Schweißstrom I erhöht, danach auf einen vorgegebenen Wert abgesenkt und im Wesentlichen konstant gehalten und mit Erreichen der Vorwärtsendgeschwindigkeit v_{Ve} der Elektrode bis zum Ende der Lichtbogenphase LB abgesenkt.

Dadurch, dass die Beschleunigung sowohl in Vorwärtsrichtung als auch in Rückwärtsrichtung vorgegeben wird, kann die mittlere Fördergeschwindigkeit v der Elektrode, welche in Summe eine Förderung der Elektrode in Richtung Werkstück darstellt, im Wesentlichen konstant gehalten werden. Die Stabilität des Kurzschlussschweißverfahrens kann dadurch erhöht werden.

Für derart hohe Beschleunigungen (zumindest bis 60000m/min/s) sind Fördereinrichtungen mit einer geringen Massenträgheit und einem Rotor mit einem Durchmesser von maximal 16,4 mm erforderlich. Zusätzlich wird die Elektrode vorzugsweise direkt von der Fördereinrichtung, also ohne Übersetzung oder Getriebe, angetrieben.

Für einen stabilen Schweißprozess ist es wichtig, dass in jedem Schweißzyklus SZ die gleichen Bedingungen herrschen. Aus diesem Grund muss die Rückwärtsendgeschwindigkeit v_{Re} während der Kurzschlussphase KS erreicht werden, sodass sich bei der folgenden Zündung des Lichtbogens immer die gleiche Lichtbogenlänge, also der gleiche Abstand zum Werkstück, einstellt. Dazu wird für die jeweilige Schweißanwendung eine entsprechende Amplitude für den Schweißstrom I während der Kurzschlussphase KS vorgegeben. Wird die Amplitude des Schweißstroms I zu hoch gewählt, könnte die Elektrode über der Oberfläche des Schmelzbades durchschmelzen und es würde ein ungewollter Lichtbogen gezündet werden. Bei zu niedriger Amplitude des Schweißstroms I könnte die Elektrode ungenügend vorgewärmt sein und eine schlechte Zündung folgen.

Wichtig für eine kurze Kurzschlussphase KS ist neben der hohen Beschleunigung auch, dass die Fördergeschwindigkeit v der Elektrode sowohl in Vorwärtsrichtung als auch in Rückwärtsrichtung relativ hoch ist, bevorzugt größer 30 m/min. Bei der Förderung der Elektrode zum Werkstück in Vorwärtsrichtung tritt dadurch der Kurzschluss schneller ein. Die Umkehr der Förderrichtung sollte ebenfalls schnell erfolgen, sodass die Dauer der Kurzschlussphase KS dadurch nicht wesentlich verlängert wird. Bei der Förderung der Elektrode vom Werkstück weg in Rückwärtsrichtung ist wichtig, dass der Lichtbogen so schnell wie möglich gezündet wird und die Lichtbogenphase LB beginnt, sodass die maximale Dauer der Kurzschlussphase KS von 3 ms nicht überschritten wird.

Die Dauer der Lichtbogenphase LB definiert die gewünschte Wärmeinbringung in das Werkstück, welche durch Verkürzen der Kurzschlussphase KS entsprechend erhöht werden kann. Beispielsweise ist die Lichtbogenphase LB doppelt so lang wie die Kurzschlussphase KS.

Mit dem erfindungsgemäßen Kurzschlussschweißverfahren wird also erreicht, dass sich im Wesentlichen eine konstante Dauer für die Kurzschlussphase KS und die Lichtbogenphase LB aufgrund der jeweiligen Werte der Schweißkennlinie einstellt. Zusätzlich wird dies durch eine exakte Regelung der Fördergeschwindigkeit v über die Beschleunigung und die Regelung des Schweißstromes I unterstützt.

Zusätzlich können dadurch höhere Schweißgeschwindigkeiten von bis 3 m/min erreicht werden bei gleichzeitig hoher Stabilität des Kurzschlussschweißverfahrens. Das erfindungsgemäße Kurzschlussschweißverfahren kann auch für Werkstückdicken bis zu 3 mm eingesetzt werden, wobei der erforderliche Einbrand durch die längere Lichtbogenphase LB gewährleistet wird. Je nach Schweißanwendung (z.B. Kehlnaht, Stumpfnaht, etc.) können beispielsweise bei einer Schweißfrequenz f zwischen 125 Hz und 170 Hz Werkstücke mit einer Dicke von 2 mm mit einer Schweißgeschwindigkeit von 1m/min oder Werkstücke mit einer Dicke von 0,8 mm mit einer Schweißgeschwindigkeit von 2 m/min verschweißt werden.

## Patentansprüche

1. Kurzschlussschweißverfahren mit aufeinanderfolgenden Schweißzyklen (SZ) mit jeweils einer Lichtbogenphase (LB) und einer Kurzschlussphase (KS), wobei zumindest die Schweißparameter (P) Schweißstrom (I) und Fördergeschwindigkeit (v) einer abschmelzenden Elektrode (9) des Kurzschlussschweißverfahrens geregelt oder eingestellt werden, und die Elektrode (9) zumindest während eines Teils der Lichtbogenphase (LB) mit einer vorgegebenen Vorwärtsendgeschwindigkeit (v_{Ve}) in Richtung eines zu bearbeitenden Werkstücks (14) gefördert wird, und zumindest während eines Teils der Kurzschlussphase (KS) mit einer vorgegebenen Rückwärtsendgeschwindigkeit (v_{Re}) vom Werkstück (14) weg gefördert wird, **dadurch gekennzeichnet, dass** eine Änderung der Fördergeschwindigkeit (dv/dt) und eine Rückwärtsendgeschwindigkeit (v_{Re}) vorgegeben wird und ein Schweißstrom (I) geregelt oder eingestellt wird, dass die Kurzschlussphase (KS) nach Erreichen der Rückwärtsendgeschwindigkeit (v_{Re}) und nach spätestens 3 ms beendet wird und spätestens alle 8 ms wiederholt wird.

2. Kurzschlussschweißverfahren nach Anspruch 1, **dadurch gekennzeichnet, dass** die Elektrode (9) mit einer Vorwärtsendgeschwindigkeit (v_{Ve}) während der Lichtbogenphase (LB) gefördert wird, welche im Wesentlichen der Rückwärtsendgeschwindigkeit (v_{Re}) während der Kurzschlussphase (KS) entspricht.

3. Kurzschlussschweißverfahren nach Anspruch 1 oder 2, **dadurch gekennzeichnet, dass** die Elektrode (9) mit einer Vorwärtsendgeschwindigkeit (v_{Ve}) während der Lichtbogenphase (LB) und einer Rückwärtsendgeschwindigkeit (v_{Re}) während der Kurzschlussphase (KS) im Bereich zwischen 30 m/min und 60 m/min gefördert wird.

4. Kurzschlussschweißverfahren nach einem der Ansprüche 1 bis 3, **dadurch gekennzeichnet, dass** die Vorwärtsendgeschwindigkeit (v_{Ve}) der Elektrode (9) bereits vor dem Beginn der Kurzschlussphase (KS) reduziert wird.

5. Kurzschlussschweißverfahren nach einem der Ansprüche 1 bis 4, **dadurch gekennzeichnet, dass** die Schweißparameter (P) derart geregelt werden, dass die Dauer eines Schweißzyklus (SZ) kleiner oder gleich 8 ms, vorzugsweise kleiner oder gleich 6,6 ms, beträgt, resultierend in einer Schweißfrequenz (f) von größer oder gleich 125 Hz, vorzugsweise größer oder gleich 150 Hz.

6. Kurzschlussschweißverfahren nach einem der Ansprüche 1 bis 5, **dadurch gekennzeichnet, dass** die Schweißparameter (P) derart geregelt werden, dass die Dauer der Lichtbogenphase (LB) mindestens doppelt so groß wie die Dauer der Kurzschlussphase (KS) ist.

7. Kurzschlussschweißverfahren nach einem der Ansprüche 1 bis 6, **dadurch gekennzeichnet, dass** der Schweißstrom (I) in Form eines Strompulses geregelt wird, dessen Dauer in der Kurzschlussphase (KS) in Abhängigkeit des bevorstehenden Endes der Kurzschlussphase (KS) ermittelt wird.

8. Kurzschlussschweißverfahren nach einem der Ansprüche 1 bis 7, **dadurch gekennzeichnet, dass** der Schweißstrom (I) während der Kurzschlussphase (KS) zunächst über eine vorgegebene Dauer auf einem vorgegebenen Wert konstant gehalten und danach reduziert wird.

9. Kurzschlussschweißverfahren nach Anspruch 8, **dadurch gekennzeichnet, dass** der Schweißstrom (I) während der Kurzschlussphase (KS) über eine Dauer von zumindest 1 ms auf dem vorgegebenen Wert konstant gehalten wird.

10. Kurzschlussschweißverfahren nach einem der Ansprüche 1 bis 9, **dadurch gekennzeichnet, dass** die Änderung der Fördergeschwindigkeit (dv/dt) in einem Bereich zwischen 30000 m/min/s und 60000 m/min/s vorgegeben wird.

11. Vorrichtung (1) zur Durchführung eines Kurzschlussschweißverfahrens mit aufeinanderfolgenden Schweißzyklen (SZ) mit jeweils einer Lichtbogenphase (LB) und einer Kurzschlussphase (KS), mit einer Einrichtung (4) zur Regelung zumindest der Schweißparameter (P) Schweißstrom (I) und Fördergeschwindigkeit (v) einer abschmelzenden Elektrode (9), und mit einer Einrichtung (8) zur Förderung der Elektrode (9) zumindest während eines Teils der Lichtbogenphase (LB) bis zu einer vorgegebenen Vorwärtsendgeschwindigkeit (v_{Ve}) in Richtung eines zu bearbeitenden Werkstücks (14), und zumindest während eines Teils der Kurzschlussphase (KS) bis zu einer vorgegebenen Rückwärtsendgeschwindigkeit (v_{Re}) vom Werkstück (14) weg, **dadurch gekennzeichnet, dass** die Regelungseinrichtung (4) dazu ausgebildet ist, spätestens mit dem Beginn der Kurzschlussphase (KS) die Vorwärtsendgeschwindigkeit (v_{Ve}) der Fördergeschwindigkeit (v) der Elektrode (9) zu reduzieren und bis zur Rückwärtsendgeschwindigkeit (v_{Re}) umzukehren, und die Fördergeschwindigkeit (v) der Elektrode (9) so zu regeln, dass die Kurzschlussphase (KS) spätestens nach 3 ms beendet ist und spätestens alle 8 ms wiederholt wird.

12. Vorrichtung (1) nach Anspruch 11, **dadurch gekennzeichnet, dass** die Einrichtung zur Förderung (8) der Elektrode (9) durch einen Direktantrieb gebildet ist.

13. Vorrichtung (1) nach Anspruch 11, **dadurch gekennzeichnet, dass** die Einrichtung zur Förderung (8) der Elektrode (9) durch einen Linearantrieb gebildet ist.
